# EUROPEAN PATENT APPLICATION

(11) **EP 4 617 766 A1**
(43) Date of publication of application: **17.09.2025**
(21) Application number: 24162812.2
(22) Date of filing: 12.03.2024
(51) Int. Cl.: G02F 1/01, G01D 5/353, G02B 6/12

(54) **INTEGRATED OPTICAL STRUCTURE AND METHOD OF FABRICATING AN INTEGRATED OPTICAL STRUCTURE**

(71) Applicant: Imec VZW, 3001 Leuven (BE)
(72) Inventor: Van Campenhout, Joris, 3001 Leuven (BE); Haffner, Christian, 3001 Heverlee (BE); Ban, Yoojin, 3001 Heverlee (BE); Ferraro, Filippo Jacopo, 1040 Etterbeek (BE); Kim, Minkyu, 3010 Kessel-Lo (BE)
(74) Representative: Roth, Sebastian

(57) **Abstract**

The disclosure relates to an integrated optical structure (10). The integrated optical structure (10) comprises: an optical waveguide structure (11); a semiconductor structure (12) which is suspended at a distance to the optical waveguide structure (11); and an electrical contact structure (13) which is electrically connected to the optical waveguide structure (11) and the semiconductor structure (12); wherein the electrical contact structure (13) is configured to apply a voltage between the optical waveguide structure (11) and the semiconductor structure (12) inducing an electrostatic force acting between the optical waveguide structure (11) and the semiconductor structure (12); and wherein the semiconductor structure (12) is designed to be elastically bent towards the optical waveguide structure (11) by the electrostatic force causing a change in an optical property, in particular a phase, of an optical signal propagating through the optical waveguide structure (11).

## Description

### TECHNICAL FIELD

The present disclosure relates to light modulation in optical interconnects. More specifically, the present disclosure relates to an integrated optical structure for light modulation and to a method of fabricating such an integrated optical structure.

### BACKGROUND

Optical interconnects are systems for propagating optical signals within an integrated circuit. Such optical interconnects require efficient and compact optical modulators for modulating optical properties of a propagating light beam, e.g. its amplitude, polarization or phase. Silicon (Si) carrier-based modulators with p-n junctions are today's workhorse for optical interconnects in integrated circuits. While p-n junction based modulators are relatively fast, they achieve only weak phase modulations.

Furthermore, resonance-based devices, such as Si ring modulators, are prone to fabrication and thermally induced variations of their operating wavelengths. These variations can be controlled by phase tuning elements. This is typically done with thermo-optic phase tuners which use local heaters. For instance, metallic heaters for thermo-optic phase turning allow for relatively large phase changes (due to large changes in refractive index caused by temperature changes, e.g., Δn_{eff} ~ 10⁻²), but are relative slow (typically few kHz to MHz) and suffer from a high power consumption (typically several mW).

### SUMMARY

Thus, it is an objective to provide an improved optical structure and an improved method of fabricating an optical structure, which avoid the above-mentioned disadvantages.

The objective is achieved by the embodiments provided in the enclosed independent claims. Advantageous implementations of the embodiments of the invention are further defined in the dependent claims.

According to a first aspect, the present disclosure relates to an integrated optical structure. The integrated optical structure comprises: an optical waveguide structure; a semiconductor structure which is suspended at a distance to the optical waveguide structure; and an electrical contact structure which is electrically connected to the optical waveguide structure and the semiconductor structure; wherein the electrical contact structure is configured to apply a voltage between the optical waveguide structure and the semiconductor structure inducing an electrostatic force acting between the optical waveguide structure and the semiconductor structure; and wherein the semiconductor structure is designed to be elastically bent towards the optical waveguide structure by the electrostatic force causing a change in an optical property, in particular a phase, of an optical signal propagating through the optical waveguide structure.

This achieves the advantage that an optical modulator is provided which achieves a relatively fast modulation of the optical signal and has a low power consumption. In particular, the integrated optical structure requires less power and offers faster speeds than a conventional thermo-optic phase tuner. For example, the integrated optical structure requires zero or very low static power and offers MHz to sub-GHz speeds.

The integrated optical structure can form an optical modulator, in particular a phase tuner. The phase tuner can be a nano-electro-opto-mechanical (NOEM) phase tuner.

For example, when bending the semiconductor structure towards the optical waveguide structure, the reduction of the distance between the waveguide structure and the semiconductor structure changes an effective refractive index (n_{eff}) or more specifically a mode index as experienced by the optical signal propagating through the waveguide structure. This in-turn causes the change in the optical parameter (e.g., phase) of the optical signal.

Besides the phase also other parameters of the optical signal, such as amplitude or polarization, could be influenced and/or changed by the change in distance between the waveguide structure and the semiconductor structure.

The semiconductor structure can be designed to have an elastic modulus that allows it to be bent by the electrostatic force by such a degree that a tangible change of the optical property of the optical signal occurs.

The electrical contact structure can comprise a number of metallic contacts and electrical lines, which connect to the optical waveguide structure and the semiconductor structure. The electrical contact structure can be connected to a voltage source for generating the voltage. The voltage source can be an external voltage source or can be a component of the optical structure.

The optical waveguide structure (in the following sometimes referred to as: waveguide structure) can comprise or can form an optical waveguide, wherein the optical signal propagates through the optical waveguide.

The optical waveguide structure can be made of silicon.

The semiconductor structure can be arranged in a parallel orientation to the optical waveguide structure. For instance, the semiconductor structure is suspended at the distance above or below the optical waveguide structure.

The components of the integrated optical structure can be fabricated onto a single substrate material (e.g., a silicon substrate). For instance, this "integration" of the components in a single substrate allows for a compact structure which can be efficiently fabricated using semiconductor processing technologies (e.g., layer deposition and etching techniques).

In an embodiment, the semiconductor structure is made of silicon, in particular poly-silicon.

For example, the semiconductor structure can be made of (moderately) doped silicon, e.g. p-doped silicon.

In an embodiment, the semiconductor structure is suspended on one end or on two opposite ends. For instance, in this way, the bending can be better controlled and/or a more stable suspension can be achieved.

In an embodiment, the distance between the optical waveguide structure and the semiconductor structure is less than 300 nm, preferably less than 200 nm.

In particular, this is the distance if the semiconductor structure is not bent. If the structure is bent, then this distance can be further reduced down to tens of nanometer. The semiconductor structure being so close to the waveguide structure strongly enhances the effect of a further reduction of the distance on Δn_{eff}.

In an embodiment, the integrated optical structure further comprises a high-k dielectric structure which is arranged on a side of the optical waveguide structure facing the semiconductor structure.

For example, the high-k dielectric prevents a pull-in of the semiconductor structure and increases a drive force per voltage.

In an embodiment, the integrated optical structure further comprises an encapsulation structure which surrounds the optical waveguide structure and the semiconductor structure; wherein the semiconductor structure is suspended in a cavity of the encapsulation structure.

For instance, one or two ends of the semiconductor structure can be anchored to the encapsulation structure, and the "bending section" of the semiconductor structure can be suspended in the cavity.

The encapsulation structure can be made of silicon dioxide (SiO₂).

The cavity can be sealed. E.g., the cavity is filled with a gas (e.g., air) or a vacuum.

In an embodiment, the sides of the semiconductor structure and the optical waveguide structure which face each other are covered by a respective liner layer.

The liner layer can facilitate a selective release of the semiconductor structure from the waveguide structure. The semiconductor structure can be completely surrounded by the liner layer.

In an embodiment, the integrated optical structure further comprises an auxiliary electrode arranged at a further distance to the semiconductor structure on a side which is opposite to the optical waveguide structure; wherein the electrical contact structure is electrically connected to the auxiliary electrode; and wherein the electrical contact structure is configured to apply a further voltage between the semiconductor structure and the auxiliary electrode inducing a further electrostatic force acting between the semiconductor structure and the auxiliary electrode; wherein the semiconductor structure is designed to be elastically bent towards the auxiliary electrode by the further electrostatic force.

In this way, the distance between the semiconductor structure and the optical waveguide structure can be enhanced if the further voltage is applied. For instance, the semiconductor structure can be switched between a first state in which it bends towards the waveguide structure and a second state in which it bends away from the waveguide structure. Thus, a difference in n_{eff} (and thus in the optical property) can be enhanced between both states.

The auxiliary electrode can be a further semiconductor structure, e.g. made from the same material as the semiconductor structure. It can also be made of a metal.

In an embodiment, the optical waveguide structure comprises a p-n-junction.

In an embodiment, the electrical contact structure is configured to apply a control voltage to the p-n-junction causing an additional change in the optical property of the optical signal propagating through the optical waveguide structure.

The control voltage can induce a carrier depletion in the p-n-junction which in turn affects the effective refractive index of the waveguide structure inducing the additional change in the optical property of the optical signal.

In this way, the optical modulation induced by the bending semiconductor structure can be combined with an optical modulation induced by carrier depletion in the p-n-junction. Thereby, the p-n-junction can offer faster speeds (e.g., tens of GHz) with typically weaker phase tuning (e.g., Δn_{eff} ~ 10⁻⁴).

In an embodiment, the optical waveguide structure is arranged in a closed loop forming a ring or disk waveguide.

For instance, the integrated optical structure can form a resonance-based optical ring resonator.

In an embodiment, the integrated optical structure further comprises at least one linear waveguide which is arranged to pass by the ring or disk waveguide.

According to a second aspect, the present disclosure relates to a method of fabricating an integrated optical structure. The method comprises: forming an optical waveguide structure; forming a semiconductor structure which is suspended at a distance to the optical waveguide structure; and forming an electrical contact structure which is electrically connected to the optical waveguide structure and the semiconductor structure; wherein the electrical contact structure is configured to apply a voltage between the optical waveguide structure and the semiconductor structure inducing an electrostatic force acting between the optical waveguide structure and the semiconductor structure; and wherein the semiconductor structure is designed to be elastically bent towards the optical waveguide structure by the electrostatic force causing a change in an optical property, in particular a phase, of an optical signal propagating through the optical waveguide structure.

In an embodiment, the method further comprises: forming respective liner layers on the optical waveguide structure and the semiconductor structure, wherein the liner layers are arranged to cover at least the sides of the semiconductor structure and the optical waveguide structure which face each other.

In an embodiment, the semiconductor structure is formed in a parallel orientation to the optical waveguide structure; wherein a sacrificial structure is formed around a section of the semiconductor structure; and wherein at least a part of the sacrificial structure is arranged between the semiconductor structure and the optical waveguide structure.

For instance, the semiconductor structure can be formed above (or in principle also below) the optical waveguide structure.

The sacrificial structure can comprise a number of sacrificial layers. At least one of the sacrificial layers can be arranged between the semiconductor structure and the optical waveguide.

In an embodiment, the method further comprises: forming an encapsulation structure around the optical waveguide structure, the semiconductor structure and the sacrificial structure; and selectively removing the sacrificial structure to generate a cavity in the encapsulation structure, wherein the semiconductor structure is suspended in the cavity.

For instance, since the semiconductor structure is not fully surrounded by the sacrificial structure it remains anchored to the encapsulation structure.

In an embodiment, semiconductor structure is suspended on one end or on two opposite ends.

In an embodiment, the sacrificial structure is selectively removed by: forming an access hole to the sacrificial structure in the encapsulation structure; and injecting an etchant for selectively etching the sacrificial structure through the access hole.

This can be done by selective dry or wet etching of the sacrificial structure.

In an embodiment, the method further comprises: closing the access hole to seal the cavity.

Prior to the sealing, the cavity can be filled by a gas (e.g., air) or a vacuum can be generated in the cavity. After generating the cavity, the electrical contact structure can be formed in the encapsulation structure.

In an embodiment, semiconductor structure is formed from silicon, in particular poly-silicon.

In an embodiment, the distance between the optical waveguide structure and the semiconductor structure is less than 300 nm, preferably less than 200 nm.

In an embodiment, the method further comprises: forming a high-k dielectric structure which is arranged on a side of the optical waveguide structure facing the semiconductor structure.

In an embodiment, the method further comprises: forming an auxiliary electrode at a further distance to the semiconductor structure on a side which is opposite to the optical waveguide structure; wherein the electrical contact structure is electrically connected to the auxiliary electrode; wherein the electrical contact structure is configured to apply a further voltage between the semiconductor structure and the auxiliary electrode inducing a further electrostatic force acting between the semiconductor structure and the auxiliary electrode; and wherein the semiconductor structure is designed to be elastically bent towards the auxiliary electrode by the further electrostatic force.

In an embodiment, the optical waveguide structure comprises a p-n-junction.

For example, the electrical contact structure is configured to apply a control voltage to the p-n-junction causing an additional change in the optical property of the optical signal propagating through the optical waveguide structure.

In an embodiment, the optical waveguide structure is arranged in a closed loop forming a ring or disk waveguide.

For example, the method further comprises: forming at least one linear waveguide which is arranged to pass by the ring or disk waveguide.

For example, the method according to the second aspect of the disclosure can be used to fabricate the integrated optical structure according to the first aspect of the disclosure.

### BRIEF DESCRIPTION OF THE DRAWINGS

Embodiments of the invention will be explained in the followings together with the figures.
- Fig. 1: shows a schematic diagram of an integrated optical structure according to an embodiment;
- Fig. 3: shows a schematic diagram of an integrated optical structure according to an embodiment;
- Fig. 4: shows a schematic diagram of an integrated optical structure according to an embodiment;
- Fig. 5: shows a schematic diagram of an integrated optical structure according to an embodiment; and
- Figs. 6A-6J: shows a process flow of a method of fabricating an integrated optical structure according to an embodiment.

### DETAILED DESCRIPTION OF THE PREFERRED EMBODIMENTS

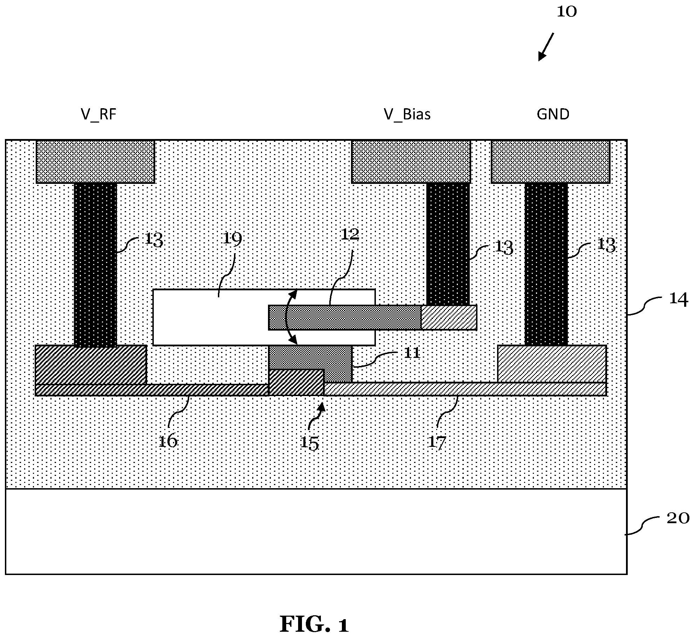

Fig. 1 shows a schematic diagram of an integrated optical structure 10 according to an embodiment.

The integrated optical structure 10 comprises: an optical waveguide structure 11; a semiconductor structure 12 which is suspended at a distance to the optical waveguide structure 11; and an electrical contact structure 13 which is electrically connected to the optical waveguide structure 11 and the semiconductor structure 12; wherein the electrical contact structure 13 is configured to apply a voltage between the optical waveguide structure 11 and the semiconductor structure 12 inducing an electrostatic force acting between the optical waveguide structure 11 and the semiconductor structure 12; and wherein the semiconductor structure 12 is designed to be elastically bent towards the optical waveguide structure 11 by the electrostatic force causing a change in an optical property, in particular a phase, of an optical signal propagating through the optical waveguide structure 11.

Thereby, Fig. 1 shows a cross-sectional view along a plane, which is perpendicular to a direction in which the optical waveguide structure 11 runs, i.e., perpendicular to the direction in which the optical signal is guided by the waveguide structure 11.

The integrated optical structure 10 or more specifically the suspended semiconductor structure 12 can form an optical modulator, in particular a phase tuner. The phase tuner can be a nano-electro-opto-mechanical (NOEM) phase tuner. The optical waveguide structure 11 of the integrated structure 10 can be connected to or be a component of an optical interconnect, e.g., in an integrated circuit.

Advantageously, the integrated optical structure 10 requires less power and offers faster modulation speeds than a conventional thermo-optic phase tuner. For example, the integrated optical structure 10 requires zero or very low static power and offers MHz to sub-GHz speeds for "switching" the optical property, wherein a conventional thermo-optic phase tuner operates at speeds of a few kHz to MHz and has a high power consumption of e.g. several mW.

The optical waveguide structure 11 can be made of silicon and surrounded by low refractive index material(s).

The optical waveguide structure 11 can comprise or can form an optical waveguide, wherein the optical signal propagates through the optical waveguide.

The semiconductor structure 12 can form an actuating element. For instance, the semiconductor structure 12 is shaped as a beam which is arranged in parallel to a surface of the optical waveguide structure 11. The semiconductor structure 12 can be suspended at the distance above the optical waveguide structure 11.

The optical signal can be an electromagnetic wave which propagates through the waveguide structure 11. Thereby, a portion of the energy density of the electromagnetic wave can be located outside of the waveguide structure and is thus influenced by the surrounding of the waveguide structure 11. The reduction of the distance between the waveguide structure 11 and the semiconductor structure 12 changes the immediate surrounding of the waveguide structure 11 and can therefore affect the optical properties, especially the phase, of the optical signal.

In particular, when the voltage is applied, the semiconductor structure 12 is bent towards the waveguide structure 11 by the electrostatic force. The resulting reduction of the distance between the waveguide structure 11 and the semiconductor structure 12 can change an effective refractive index (n_{eff}) or more specifically a mode index as experienced by (at least a part of) the optical signal propagating through the waveguide structure 11. This can in-turn cause the change in the optical parameter (e.g., phase) of the optical signal. Thereby, the change of n_{eff} (also referred to as: Δn_{eff}) as experienced by the optical signal can be stronger than in a conventional p-n junction based phase tuner. For instance, the Δn_{eff} in the integrated optical structure 10 is between 10⁻³ and 10⁻¹.

When the voltage is switched off again, the semiconductor structure 12 can return to its initial straight (i.e., non-bent) orientation. A distinction can therefore be made between two switching states of the integrated optical structure 10, wherein each switching state can be associated with a different n_{eff}.

Bending the semiconductor structure 12 towards the waveguide structure 11 can also change the capacitance of a capacitor whose electrodes are formed by the semiconductor structure 12 and the waveguide structure 11.

The semiconductor structure 12 can be designed to have an elastic modulus that allows it to be bent by the electrostatic force by such a degree that a tangible change of the optical property of the optical signal occurs.

The electrical contact structure 13 can comprise a number of (vertical) electrical lines, which are electrically connected to the optical waveguide structure 11 and the semiconductor structure 12. The electrical lines 13 can be formed from a metal, such as tungsten or copper. The electrical contact structure 13 can further be connected to a voltage source for generating the voltage, e.g. via electrical contact pads. The voltage source can be an external voltage source or can be a component of the optical structure.

For instance, as shown in Fig. 1, the electrical contact structure 13 can apply a bias voltage (V_{Bias}) to the semiconductor structure 12 and can connect the optical waveguide structure 11 to ground (GND).

Optionally, the optical waveguide structure 11 can comprise a p-n-junction 15. The p-n-junction 15 can be formed by an interface of a n-type semiconductor material 16 and a p-type semiconductor material 15 (e.g., n- and p-doped silicon). For example, a part of the waveguide structure 11 is formed from the n-type material 16 and a part of the waveguide structure 11 is formed from the p-type material 17, wherein a vertical p-n-junction 15 is formed at an interface of these materials 16, 17.

A further part of the waveguide structure 11, e.g., the part above the p-n-junction 15 facing the semiconductor structure 12, can be weaker doped (e.g., moderately p-doped). Also, the semiconductor structure 12 can be moderately p-doped.

The n-type doped material 16 and the p-type doped material 17 can be connected to respective electrical lines of the electrical contact structure 13. The electrical contact structure 13 can be configured to apply a control voltage to the p-njunction causing an additional change in the optical property of the optical signal propagating through the waveguide structure. The control voltage can be a pulsed or AC-type voltage with a frequency of e.g. >10 GHz.

For instance, the control voltage (V_{RF}) is applied to the n-type material 16 and the p-type material 17 is connected to ground, as shown in Fig. 1. The control voltage V_{RF} can induce a carrier depletion in the p-n-junction 15 which in turn affects the effective refractive index of the waveguide structure 11 inducing the additional change in the optical property (e.g., the phase) of the optical signal.

The p-doped part of the waveguide structure 11 can form a shared ground contact for both voltages V_{Bias} and V_{RF}.

In this way, the advantages of the optical modulation by the bending semiconductor structure 12 and by the p-n-junction 15 can be combined in a single, integrated structure 10. The p-n-junction 15 can offer fast modulation speeds (e.g., tens of GHz) with weaker phase tuning (e.g., Δn_{eff} ~ 10⁻⁴), while the bending semiconductor structure 12 can offer moderate modulation speeds (e.g., MHz to sub-GHz) with higher phase changes (e.g., Δn_{eff} ~10⁻³ - 10⁻¹). Furthermore, both of these modulation techniques require relatively little power, especially compared to conventional thermo-optic modulators.

The semiconductor structure 12 can be made of silicon, in particular poly-silicon. The semiconductor structure 12 can be made of a doped silicon, e.g. a moderately doped silicon. The semiconductor structure 12 can be a p-type semiconductor.

Thus, the integrated optical structure 10, as shown in Fig. 1, can form a high-speed Si p-n phase shifter with integrated poly-Si NOEM tuner.

For instance, the distance between the optical waveguide structure 11 and the semiconductor structure 12 is less than 300 nm, preferably less than 200 nm. This distance can refer to the minimal distance between both structures 11, 12 if no voltage (V_{Bias}) is applied and thus if the semiconductor structure 12 is not bent towards the waveguide structure 11. When applying the voltage, the structure 12 can be bent towards the waveguide structure 11, reducing this distance.

The integrated optical structure 10 can further comprise an encapsulation structure 14 which surrounds the optical waveguide structure 11 and the semiconductor structure 12. The semiconductor structure 12 can be suspended in a cavity 19 of the encapsulation structure 14.

For instance, as shown in Fig. 1, one end of the semiconductor structure 12 can be anchored to the encapsulation structure 14, and the "bending section" of the semiconductor structure can be suspended in the cavity 14.

The encapsulation structure 14 can be made of SiO₂.

The cavity 19 can be sealed. E.g., the cavity 19 is filled with a gas (e.g., air) or a vacuum.

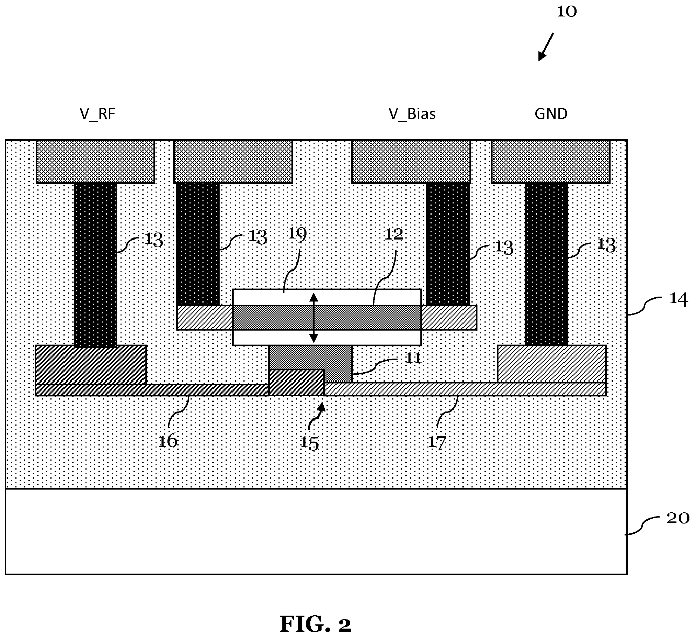

Figs 2 to 5 show exemplary embodiments of the integrated optical structure 10, which build on the integrated optical structure 10 shown in Fig. 1. Same elements are labelled with the same reference signs. Hereinafter, only the differences between Fig. 1 and Figs. 2 to 5 are explained. Each of Figs. 2-5 shows again a cross-sectional view of the integrated optical structure 10.

In the exemplary embodiment shown in Fig. 2, the semiconductor structure 12 is suspended on two opposite ends. For instance, both ends of the semiconductor structure 12 are anchored to the encapsulation structure 14, and the "bending section" of the semiconductor structure is suspended in the cavity 14.

Thereby, both ends of the semiconductor structure 12 can be connected to an electrical line of the electrical contact structure 13.

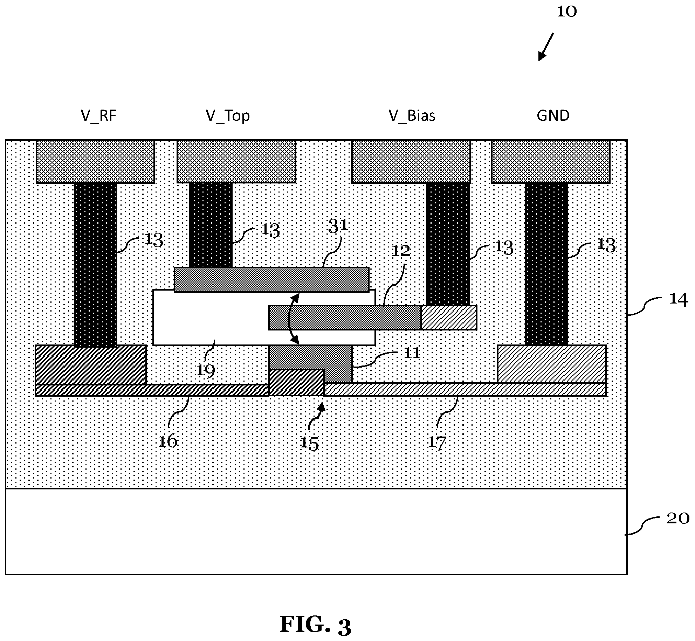

In the exemplary embodiment shown in Fig. 3, the integrated optical structure 10 comprises an auxiliary electrode 31 arranged at a further distance to the semiconductor structure 12 on a side which is opposite to the optical waveguide structure 11. For instance, the optical waveguide structure 11 is arranged below the semiconductor structure 12 and auxiliary electrode 31 is arranged above the semiconductor structure 12, or vice versa.

The electrical contact structure 13, in particular an electrical line of the electrical contact structure 13, can be electrically connected to the auxiliary electrode 31. The electrical contact structure 13 can be configured to apply a further voltage (V_{Top}) between the semiconductor structure 12 and the auxiliary electrode 31 inducing a further electrostatic force acting between the semiconductor structure 12 and the auxiliary electrode 31. The semiconductor structure 12 can be designed to be elastically bent towards the auxiliary electrode 31 by the further electrostatic force which is induced by the further voltage (V_{Top}).

In this way, the distance between the semiconductor structure 12 and the optical waveguide structure 11 can be enhanced by bending the semiconductor structure 12 away from the waveguide structure 11. Thus, the semiconductor structure 12 can be switched between a first state where it bends towards the waveguide structure 11 and a second state where it bends away from the waveguide structure 11.

In other words, the auxiliary electrode 31, which may also be referred to as top electrode, can push the actuating element (i.e., the semiconductor structure 12) upwards. This can enable faster switching times as the upwards and downwards movement of the structure 12 can be accelerated by compensating its low-frequency filter behavior with an appropriate spectral shaped plus drive.

The auxiliary electrode 31 can comprise any one of the following materials: Si, GaN, SiC, TCO, or can be formed from a lossy metal as this electrode can be spaced further away from optical fields in the waveguide. If the auxiliary electrode 31 is made of a semiconductor material, it can be p-doped material.

For instance, the electrical contact structure 13 either applies the voltage (V_{Bias}) between waveguide structure 11 and semiconductor structure 12, or applies the further voltage (V_{Top}) between semiconductor structure 12 and the auxiliary electrode 31.

The further distance between the semiconductor structure 12 and the auxiliary electrode 31 can be in a similar range to the distance between the semiconductor structure 12 and the waveguide structure 11.

In the example shown in Fig. 3, the semiconductor structure 12 is suspended on one end. However, the auxiliary electrode 31 could also be arranged above a semiconductor structure 12 which is suspended on both ends (as e.g. shown in Fig. 2).

The auxiliary electrode 31 can further be arranged to overlap the semiconductor structure 12. E.g., the shape and size of the auxiliary electrode 31 can essentially correspond to the shape and size of the semiconductor structure 12.

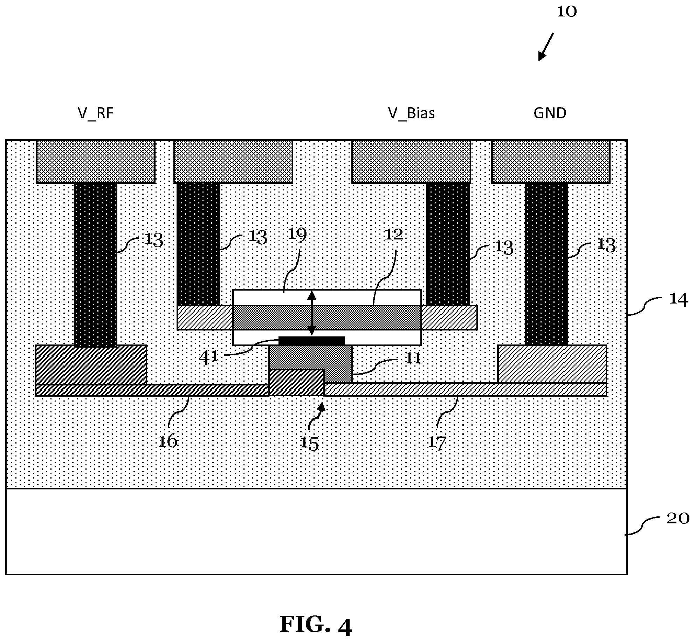

In the exemplary embodiment shown in Fig. 4, the integrated optical structure 10 comprises a high-k dielectric structure 41 which is arranged on a side of the optical waveguide structure 11 that faces towards the semiconductor structure 12.

For example, the high-k dielectric structure 41 prevents a pull-in of the semiconductor structure 12 and increases a drive force per voltage. In addition or alternatively, the high-k dielectric structure 41 can act as a mechanical stopper for the actuating element (semiconductor structure 12).

The geometry of the high-k dielectric structure 41 can be chosen such that its surface adhesion is smaller than a restoring force of the semiconductor structure 12.

Furthermore, the high-k dielectric structure 41 can increase the capacitance of a capacitor formed by the optical waveguide structure 11 and the semiconductor structure 12. This can lead to a higher actuation force caused by the voltage.

The high-k dielectric structure 41 can be formed from a non-conductive material with *εᵣ*>1, such as SiO₂, SiN, AlOₓ, or HfO₂.

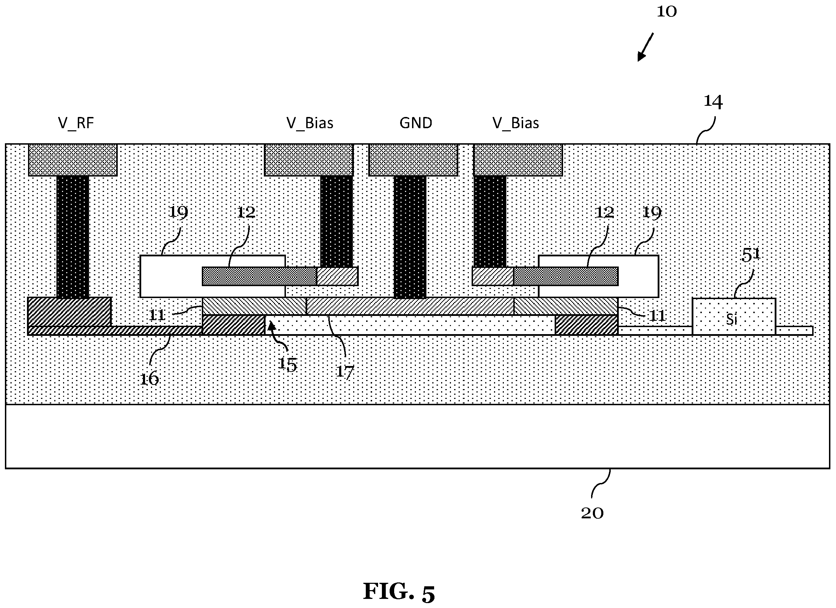

In the exemplary embodiment shown in Fig. 5, the optical waveguide structure 11 is arranged in a closed loop. Hence, in this example, the optical waveguide structure 11 forms a ring or a disk waveguide. Thereby, a cross-sectional view along a plane which runs through the center of a ring formed by the ring waveguide 11 is shown.

For example, the integrated optical structure 10 forms a ring modulator or a micro ring-disk modulator.

The integrated optical structure can comprise at least one linear waveguide 51 which is arranged to pass by the ring waveguide 11. Thereby, light with a wavelength that corresponds to a resonance wavelength of the ring waveguide can be coupled from the linear waveguide 51 in the ring waveguide, or vice versa. For instance, the linear waveguide 51 is made of silicon.

The integrated optical structure 10 can comprise a number of semiconductor structures 12 which form respective actuating elements, and which are arranged on different locations along the ring waveguide 11. By bending at least one of the semiconductor structures 12 towards the ring waveguide 11, an optical property of the ring waveguide, e.g. its resonance frequency, can be modulated. In this way, fabrication or thermally induced variations in the ring waveguide can be compensated in a fast an efficient way.

The ring waveguide 11 can further comprise at least one p-n-junction 15 to further modulate its optical properties or more specifically the optical properties of an optical signal propagating in the ring waveguide.

By integrating the optical structure 10 as a nano-opto-electro-mechanical phase tuning element on a (ring) resonant carrier-based modulator, as shown in Fig. 5, a conventional heater-based thermo-optic phase shifter can be omitted. In this way, the overall power consumption of the ring resonant modulator can be reduced.

As shown in each of Figs. 1-5, the components of the integrated optical structure 10 can be fabricated onto a single substrate 20 (e.g., a silicon substrate). For instance, this "integration" of the components in a single substrate 20 allows for a compact structure which can be efficiently fabricated using semiconductor processing technologies (e.g., layer deposition and etching techniques).

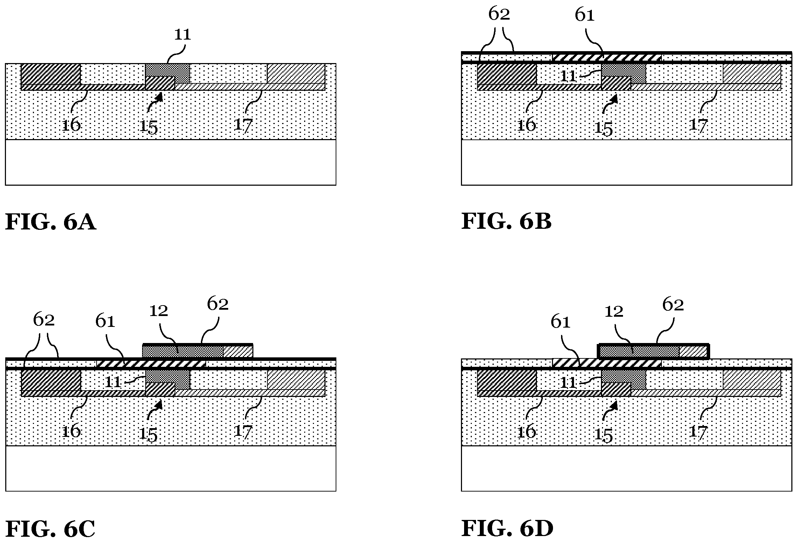

Figs. 6A-6J shows a process flow of a method of fabricating an integrated optical structure 10 according to an embodiment. For instance, the method can be used to fabricate the integrated optical structure 10 as shown in any one of Figs. 1 to 5.

In a first step, shown in Fig. 6A, the optical waveguide structure 11 is formed.

For example, the optical waveguide structure 11 can comprise the p-n-junction 15. The p-n-junction 15 can be formed by an interface of a n-type semiconductor material 16 and a p-type semiconductor material 15 (e.g., n- and p-doped silicon).

The n-type semiconductor material 16 and the p-type material can be deposited on a by means of a suitable deposition technique, such as chemical vapor deposition (CVD). The waveguide structure 11 can be formed on or in a material layer (e.g., an oxide layer), which can be the material of the encapsulation structure 14 that is formed in a later step. After deposition, a planarization can be carried out.

In a further step, shown in Fig. 6B, a first part of a sacrificial structure 61 (e.g., a first of a number of sacrificial layers) can be formed on the optical waveguide structure. Optional protective liner layers 62 can be formed on both sides of the sacrificial layer 61.

The sacrificial structure 61 can be formed from any one of the following materials: silicon, molybdenum, germanium, SiGe, titanium, TiN, tantalum, TaN, tungsten, TiW, SiOₓ, and AlOₓ. In particular, the sacrificial layer 61 is formed from a material which is etched by xenon difluoride (XeF₂) with high selectivity.

The liner layers 62 can be formed from any one of the following materials: thermal oxide, LTO, Si₃N₄, SiC, HFO₂, TiO₂, Al₂O₃.

In a further step, shown in Fig. 6C, the semiconductor structure 12 is formed at a distance to the optical waveguide structure 11.

For instance, the material of the semiconductor structure 12 is deposited on liner layers 62 covering the waveguide structure 11, such that the resulting semiconductor structure 12 is arranged in a parallel orientation (e.g., in the form of a parallel beam) to the waveguide structure 11. In this way, the semiconductor structure 12 can be formed above the optical waveguide structure 11.

The semiconductor structure 12 can be formed from poly-Si. A p-type doping material can thereby be implanted in the structure 12. Alternatively, a SOI W2W bonding could be carried out to provide the semiconductor structure 12 in form of a top c-Si layer.

Further liner layers 62 can be formed on the semiconductor structure 12 and/or the semiconductor structure 12 can be fully surrounded by liner layers 62 (as e.g. shown in Fig. 6D). The liner layer 62 can be selectively removed from regions of the sacrificial structure 61 which are not covered by the semiconductor structure 12.

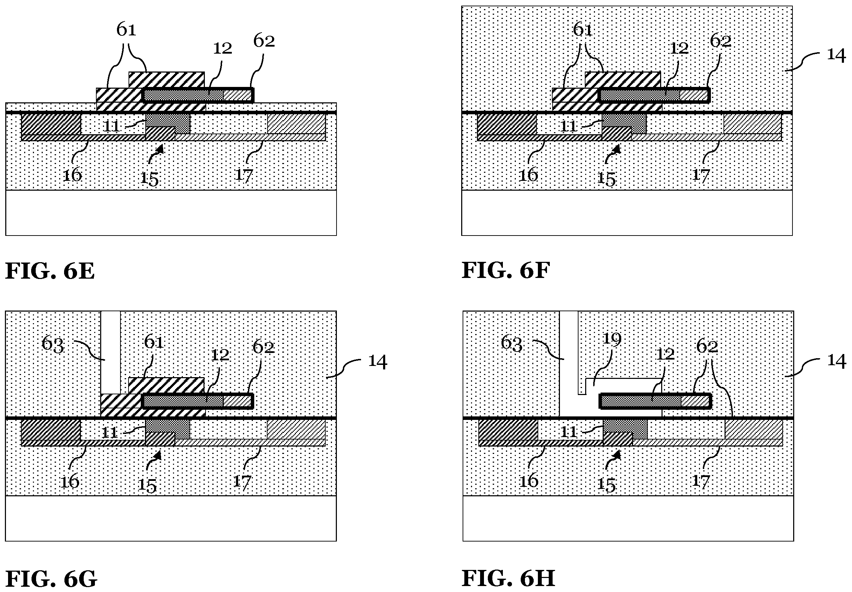

Subsequently, as shown in Fig. 6E, further parts of the sacrificial structure 61 (e.g., further sacrificial layers) can be deposited, such that the sacrificial structure 61 is formed around a section of the semiconductor structure 12; wherein at least a part (e.g., at least one layer) of the sacrificial structure 61 is arranged between the semiconductor structure 12 and the optical waveguide structure 11.

Then, as shown in Fig. 6F, a further material layer can be deposited, such that an encapsulation structure 14 is formed, wherein the optical waveguide structure 11, the semiconductor structure 12 and the sacrificial structure 61 are buried in the encapsulation structure 14.

The material layer(s) forming the encapsulation structure 14 can be SiO₂ layers.

Subsequently, the sacrificial structure 61 can be selectively removed to generate the cavity 19 in the encapsulation structure 14. To do this, an access hole 63 (also referred to as: chimney) to the sacrificial structure 61 can be formed in the encapsulation structure 14, as shown in Fig. 6G. The access hole 63 can be formed by high-aspect ratio trench patterning.

Then, an etchant can be injected through the access hole 63 to selectively etch the sacrificial structure 61 through the access hole 63, as shown in Fig. 6H. This can be done by selective dry or wet etching. For instance, the etchant can be a hot phosphor or a dry plasma. The etchant material can comprise XeF₂.

The semiconductor structure 12 can be suspended in the resulting cavity 19 at the distance to the waveguide structure 11. For instance, the semiconductor structure 12 is anchored to the encapsulation structure 14 by one end.

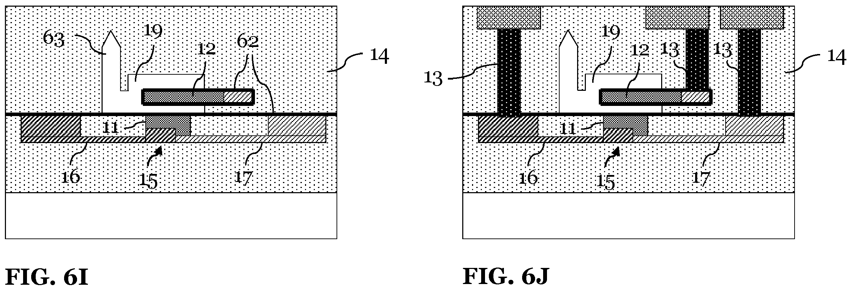

The access hole 63 can be subsequently closed by a deposition of the encapsulation structure 14 material (e.g., PEALD of an oxide) as shown in Fig. 6I. Prior to the closure, the cavity 19 can be filled with a gas (e.g., air) or a vacuum can be generated in the cavity 19.

The liner layers 62 on the sides of the optical waveguide structure 11 and the semiconductor structure 12 which are facing each other can stay intact. These layers can enable a selective release of the semiconductor structure 12 form the waveguide structure 11.

In a final step, shown in Fig. 6J, the electrical contact structure 13 can be formed. For instance, the electrical contact structure 13 comprises a number of electrical lines, which connect to the optical waveguide structure 11 and the semiconductor structure 12. The electrical contact structure 13 can be connected to a voltage source for generating the voltage, e.g. via electrical contacts which are formed on the electrical lines.

The electrical contact structure 13, in particular the electrical lines, can be formed from a metal, such as tungsten (W) or copper (Cu).

The electrical contact structure 13 can be used to apply the voltage between the optical waveguide structure 11 and the semiconductor structure 12 to induce the electrostatic force acting between the optical waveguide structure 11 and the semiconductor structure 12; wherein the semiconductor structure 12 is designed (e.g., by its geometry and/or elastic modulus) to be elastically bent towards the optical waveguide structure 11 by the electrostatic force causing a change in the optical property of the optical signal propagating through the optical waveguide structure 11.

In the claims as well as in the description of this disclosure, the word "comprising" does not exclude other elements or steps and the indefinite article "a" or "an" does not exclude a plurality. A single element may fulfill the functions of several entities or items recited in the claims. The mere fact that certain measures are recited in the mutual different dependent claims does not indicate that a combination of these measures cannot be used in an advantageous implementation.

## Claims

1. An integrated optical structure (10), comprising:
an optical waveguide structure (11);
a semiconductor structure (12) which is suspended at a distance to the optical waveguide structure (11); and
an electrical contact structure (13) which is electrically connected to the optical waveguide structure (11) and the semiconductor structure (12);
wherein the electrical contact structure (13) is configured to apply a voltage between the optical waveguide structure (11) and the semiconductor structure (12) inducing an electrostatic force acting between the optical waveguide structure (11) and the semiconductor structure (12); and
wherein the semiconductor structure (12) is designed to be elastically bent towards the optical waveguide structure (11) by the electrostatic force causing a change in an optical property, in particular a phase, of an optical signal propagating through the optical waveguide structure (11).

2. The integrated optical structure (10) of claim 1,
wherein the semiconductor structure (12) is made of silicon, in particular poly-silicon.

3. The integrated optical structure (10) of claim 1 or 2,
wherein the semiconductor structure (12) is suspended on one end or on two opposite ends.

4. The integrated optical structure (10) of any one of the preceding claims,
wherein the distance between the optical waveguide structure (11) and the semiconductor structure (12) is less than 300 nm, preferably less than 200 nm.

5. The integrated optical structure (10) of any one of the preceding claims, further comprising:
a high-k dielectric structure (41) which is arranged on a side of the optical waveguide structure (11) facing the semiconductor structure (12).

6. The integrated optical structure (10) of any one of the preceding claims, further comprising:
an encapsulation structure (14) which surrounds the optical waveguide structure (11) and the semiconductor structure (12);
wherein the semiconductor structure (12) is suspended in a cavity (19) of the encapsulation structure (14).

7. The integrated optical structure (10) of any one of the preceding claims, further comprising:
wherein the sides of the semiconductor structure (12) and the optical waveguide structure (11) which face each other are covered by a respective liner layer (62).

8. The integrated optical structure (10) of any one of the preceding claims, further comprising:
an auxiliary electrode (31) arranged at a further distance to the semiconductor structure (12) on a side which is opposite to the optical waveguide structure (11);
wherein the electrical contact structure (13) is electrically connected to the auxiliary electrode (31); and
wherein the electrical contact structure (13) is configured to apply a further voltage between the semiconductor structure (12) and the auxiliary electrode (31) inducing a further electrostatic force acting between the semiconductor structure (12) and the auxiliary electrode (31);
wherein the semiconductor structure (12) is designed to be elastically bent towards the auxiliary electrode (31) by the further electrostatic force.

9. The integrated optical structure (10) of any one of the preceding claims,
wherein the optical waveguide structure (11) comprises a p-n-junction (15).

10. The integrated optical structure (10) of claim 9,
wherein the electrical contact structure (13) is configured to apply a control voltage to the p-n-junction (15) causing an additional change in the optical property of the optical signal propagating through the optical waveguide structure (11).

11. The integrated optical structure (10) of any one of the preceding claims,
wherein the optical waveguide structure (11) is arranged in a closed loop forming a ring or disk waveguide.

12. The integrated optical structure (10) of claim 11, further comprising:
at least one linear waveguide (51) which is arranged to pass by the ring or disk waveguide.

13. A method of fabricating an integrated optical structure (10), comprising:
forming an optical waveguide structure (11);
forming a semiconductor structure (12) which is suspended at a distance to the optical waveguide structure (11); and
forming an electrical contact structure (13) which is electrically connected to the optical waveguide structure (11) and the semiconductor structure (12);
wherein the electrical contact structure (13) is configured to apply a voltage between the optical waveguide structure (11) and the semiconductor structure (12) inducing an electrostatic force acting between the optical waveguide structure (11) and the semiconductor structure (12); and
wherein the semiconductor structure (12) is designed to be elastically bent towards the optical waveguide structure (11) by the electrostatic force causing a change in an optical property, in particular a phase, of an optical signal propagating through the optical waveguide structure (11).

14. The method of claim 13, further comprising:
forming respective liner layers (62) on the optical waveguide structure (11) and the semiconductor structure (12), wherein the liner layers (62) are arranged to cover at least the sides of the semiconductor structure (12) and the optical waveguide structure (11) which face each other.

15. The method of claim 13 or 14,
wherein the semiconductor structure (12) is formed in a parallel orientation to the optical waveguide structure (11);
wherein a sacrificial structure (61) is formed around a section of the semiconductor structure (12);
wherein at least a part of the sacrificial structure (61) is arranged between the semiconductor structure (12) and the optical waveguide structure (11).

16. The method of claim 15, further comprising:
forming an encapsulation structure (14) around the optical waveguide structure (11), the semiconductor structure (12) and the sacrificial structure (61); and
selectively removing the sacrificial structure (61) to generate a cavity (19) in the encapsulation structure (14), wherein the semiconductor structure (12) is suspended in the cavity (19).

17. The method of claim 16,
wherein the sacrificial structure (61) is selectively removed by:
- forming an access hole (63) to the sacrificial structure (61) in the encapsulation structure (14); and
- injecting an etchant for selectively etching the sacrificial structure (61) through the access hole (63).

18. The method of claim 17, further comprising:
closing the access hole to seal the cavity (19).
